# EUROPEAN PATENT APPLICATION

(11) **EP 1 543 914 A1**
(43) Date of publication of application: **22.06.2005**
(21) Application number: 03797568.7
(22) Date of filing: 09.09.2003
(51) Int. Cl.: B23K 26/28

(54) **LASER WELDING METHOD**

(30) Priority: 09.09.2002 JP 2002262864
(71) Applicant: Futaba Industrial Company Ltd., Okazaki-shi, Aichi 444-8558 (JP); TOYOTA JIDOSHA KABUSHIKI KAISHA, Toyota-shi, Aichi 471-8571 (JP)
(72) Inventor: MAKASE, Kikuo Futaba Industrial Co., Ltd., Okazaki-shi, Aichi 444-8558 (JP); OGAWA, Kenji, Toyota-shi, Aichi 471-8571 (JP)
(74) Representative: Smith, Norman Ian
(86) International application number: PCT/JP2003/011523
(87) International publication number: WO 2004/026523

(57) **Abstract**

A laser welding method allowing lap welding with a mother member and an attaching member overlapping each other, without incurring a lowering of strength. In laser welding, a laser beam is directed to a flange (4) along a welding path (16) extending from a welding start point (12) to a welding termination point (14). Further, the welding path (16) is turned back before reaching the welding termination point (14), and the welding termination point (14) is located at a place where there is no stress concentration due to external forces on the mother member (1) and the attaching member (2) without coincidence between the welding start point (12) and the welding termination point (14). The welding path (16) is substantially C-shaped, and, after it is turned back, a longer welding path than the crater produced in the welding termination point (14) is provided to complete the welding termination point (14).

## Description

### TECHNICAL FIELD

This invention relates to a laser welding method for welding an attaching member to a mother member, more particularly to a laser welding method for motor vehicles, in which a pipe for reinforcement, to which an instrument panel, etc. is attached, and an attaching member, are welded together.

### BACKGROUND ART

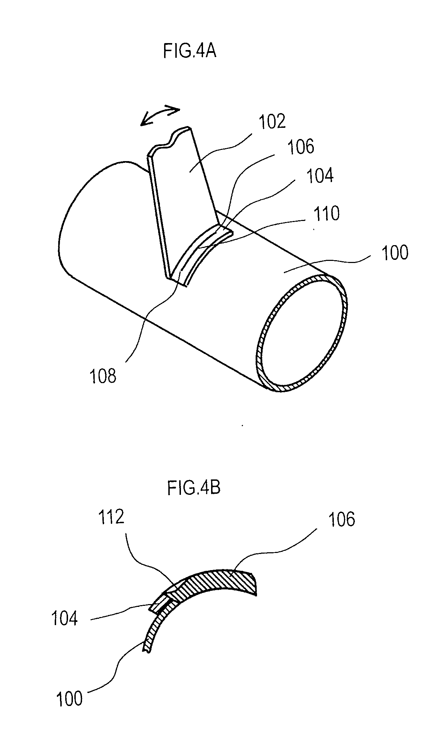

Heretofore, a laser welding method has been adopted when a mother member and an attaching member are lap welded. For example, as shown in Fig. 4A, when a mother member 100, which is a pipe, and an attaching member 102 are welded together, a flange part 104 having a shape of a circular arc, adapted to a shape of an outer periphery of the mother member 100, is formed to the attaching member 102. A laser beam is directed to the flange part 104 along a welding path 110 extending from a welding start point 106 to a welding termination point 108 to accomplish lap welding.

However, in laser welding, welding is performed melting the mother member without using a welding rod. Therefore, in such a conventional method, when a welded part immediately before the welding termination point is getting hardened, a melted portion of the mother member at the welding termination point is pulled by the welded part. As a result, a crater 112 is formed as shown in Fig. 4B.

Due to the crater 112, fatigue strength is lowered at the welding termination point 108. Accordingly, if external forces are applied between the mother member 100 and the attaching member 102, the crater 112 may become a cause of damage in an extreme case.

One object of the present invention is to provide a laser welding method that allows lap welding of a mother member and an attaching member, without incurring a lowering of strength.

### DISCLOSURE OF THE INVENTION

To attain the above object and solve the aforementioned problem, the present invention provides a laser welding method as follows. In a welding method in which a flange part of an attaching member is arranged onto a mother member and welded to the same, the welding corresponds to laser welding, and a laser beam is directed to the flange part along a welding path extending from a welding start point to a welding termination point to perform welding. The welding path is turned back before reaching the welding termination point, without overlap between the welding start point and the welding termination point. The welding termination point is located at a place where there is no stress concentration due to external forces on the mother member and the attaching member.

The welding path may be substantially C-shaped, and after the welding path is turned back, a longer welding path than a crater produced in the welding termination point may be provided to complete the welding termination point. Or, the welding path may be spiral-shaped including at least one round which extends from an outer welding start point to an inner welding termination point, and after the welding path makes one round, a longer welding path than the crater produced in the welding termination point may be further provided to complete the welding termination point. The mother member may be a pipe, and the flange part may be formed into a circular arc, adapted to a shape of an outer periphery of the pipe. The mother member and the attaching member may be for use in reinforcement of an instrument panel of a motor vehicle. The laser welding may be remote laser welding in which a long-focus laser beam is reflected in a mirror and guided along the welding path.

### BRIEF DESCRIPTION OF THE DRAWINGS

Fig. 1 is a diagrammatic perspective view showing a laser welding method as an embodiment of the present invention;

Fig. 2 is an explanatory view of remote laser welding according to the embodiment;

Figs. 3A and 3B are explanatory views of a welding path according to the embodiment; and

Figs. 4A and 4B are diagrammatic perspective views showing conventional welding.

### BEST MODE FOR CARRYING OUT THE INVENTION

An embodiment of the present invention will be explained hereafter, by way of the accompanying drawings.

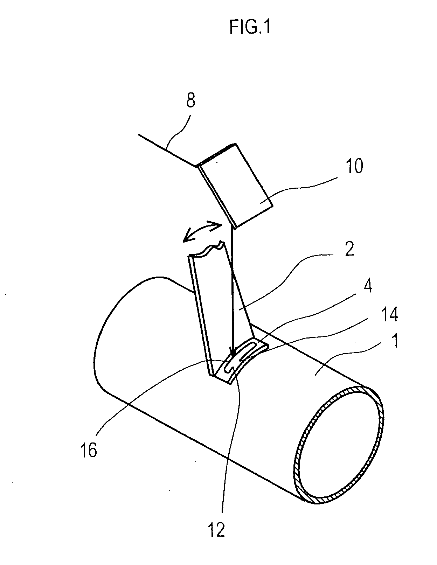

As shown in Fig. 1, a mother member 1 in the present embodiment is a pipe, having a diameter of 38.1 mm and a thickness of 1.0 mm. The pipe is used as a reinforcement to which an instrument panel, etc. of a motor vehicle is attached. An attaching member 2 welded to the mother member 1 is provided with a flange part 4, which is formed into a circular arc, adapted to a shape of a curved surface of an outer periphery of the mother member 1.

In the present embodiment, the attaching member 2 has a thickness of 1.6 mm, which is larger than a thickness of the mother member 1. The flange part 4 is bent by press molding, etc., so that the flange part 4 can be arranged onto the outer periphery of the mother member 1 in a closely attached manner.

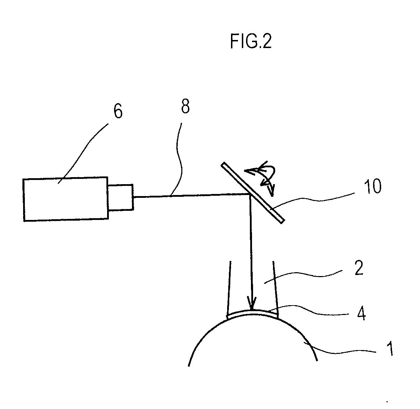

Remote laser welding is applied to the present embodiment. As shown in Fig. 2, from a welding laser oscillator 6, a long-focus laser beam 8 having a focal length of 600 to 1,000 mm is emitted. The laser beam 8 irradiated in a mirror 10 is guided to the flange part 4.

An angle of the mirror 10 is capable of being changed. By changing the angle, a guiding direction of the laser beam 8 can be shifted along a circumferential direction and an axial direction of the mother member 1. Accordingly, an irradiation point of the laser beam 8 is capable of being displaced on a plane surface. However, in case the laser beam 8 is guided to the curved surface of the pipe having a diameter of 38.1 mm as in the present embodiment, if an irradiation angle of the laser beam 8 exceeds 20 degrees, diffusion of energy becomes large and welding can no longer be performed. In the present embodiment, on the curved surface of the pipe having a diameter of 38.1 mm, the maximum welding length in the circumferential direction is limited to about 15 mm.

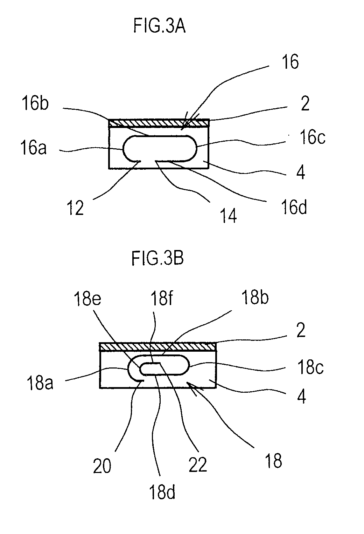

In the present embodiment, as shown in Fig. 3A, the welding path 16 extending from the welding start point 12 to the welding termination point 14 is looped, and the welding start point 12 and the welding termination point 14 do not overlap with each other so that the welding path 16 is substantially C-shaped. The reason for avoiding overlap between the welding start point 12 and the welding termination point 14 is because, if there is such overlap, a hole may be produced by melting.

The laser welding starts from the welding start point 12 of the welding path 16. The welding path 16, which extends in the circumferential direction of the mother member 1 from the welding start point 12, turns back in a semicircular arc turning part 16a to head for an opposite direction in the circumferential direction. After forming a linear part 16b having a predetermined length, the welding path 16 turns back again to an opposite direction in a semicircular arc turning part 16c to form a linear part 16d. The laser welding is completed at the welding termination point 14 which is spaced apart from the welding start point 12 by a predetermined distance.

The welding termination point 14 is located at a place where there is no stress concentration due to external forces applied to the mother member 1 and the attaching member 2. In the present embodiment, the external forces are applied to the attaching member 2 as shown by an arrow in Fig. 1, and a moment around an axis of the mother member 1 is generated.

Consequently, the stress concentrates on both of the semicircular arc turning parts 16a and 16c of the welding path 16. On one hand, a tensile force, which operates to tear off the turning part 16c from the mother member 1, acts on the attaching member 2 with the turning part 16a serving as a fulcrum. On the other hand, a tensile force, which operates to tear off the turning part 16a from the mother member 1, acts on the attaching member 2 with the turning part 16c serving as a fulcrum. The above tensile forces repeatedly act by turns.

In the present embodiment, the welding termination point 14 is not provided in the turning part 16c. The linear part 16d is further provided, which extends from the turning part 16c and is longer than a crater produced in the welding termination point 14, to complete the welding termination point 14. Therefore, the stress concentration does not occur at the welding termination point 14. That is, even if the external forces are repeatedly applied between the mother member 1 and the attaching member 2, the external forces act on the turning parts 16a and 16c where appropriate welding has been performed. Thus, the mother member 1 and the attaching member 2 can be lap welded without incurring a lowering of fatigue strength.

A length of the crater varies depending on material quality and welding conditions of the mother member 1 and the attaching member 2. Therefore, it is preferable that a length of the linear part 16d is determined by ex ante experiments. Also, the turning parts 16a and 16b may not be formed into a circular arc but a rectangular shape. Or the welding path 16 may be an elliptic arc which includes the turning parts 16a and 16c and the linear parts 16b and 16d.

The welding path 16 may not be substantially C-shaped. As shown in Fig. 3B, a spiral-shaped welding path 18 is also acceptable. The welding path 18 extends from an outward welding start point 20 to an inward welding termination point 22.

Starting from the welding start point 20, the welding path 18 turns back at a semicircular arc turning part 18a to extend toward an opposite direction in the circumferential direction. After forming a linear part 18b having a predetermined length, the welding path 18 turns back at a semicircular arc turning part 18c to form a linear part 18d extending to an opposite direction. After forming the linear part 18d, the welding path 18 turns back at a semicircular arc turning part 18e to form a turning part 18e inward of the welding start point 20.

After forming the turning part 18e, a linear part 18f is provided which is longer than a crater produced in the welding termination point 22, to complete the welding termination point 22. As a result, the welding path 18, after making one round, is provided with a linear part 18f which is longer than the crater produced in the welding termination point 22.

Therefore, stress concentration does not occur at the welding termination point 22. That is, even if external forces are repeatedly applied between the mother member 1 and the attaching member 2, the external forces act on the turning parts 18a and 18c where appropriate welding has been performed. Thus, the mother member 1 and the attaching member 2 can be lap welded without incurring a lowering of fatigue strength.

The welding termination point 22 may be located in the turning part 18e, as far as the turning part 18e has a length relative to the length of the crater produced at the welding termination point 22, and the welding path 18 having at least one round is formed so that the welding termination point 22 is located at a position inward of the spiral-shaped welding path 18 from the welding start point 20.

The linear parts 18b, 18d and 18f are not necessarily provided in the welding path 18. The welding path 18 may only consist of the circular arc turning parts 18a, 18c and 18e, and the welding termination point 22 may be provided in the turning part 18e. Or, the linear parts 18b, 18d, and 18f may also be formed into a circular arc so that the welding path 18 is shaped like an ellipse.

The present invention is not limited to the above embodiment, and other modifications and variations may be possible without departing from the spirit and scope of the present invention.

### INDUSTRIAL AVAILABILITY

According to the above-described laser welding method of the present invention, the mother member and the attaching material can be lap welded without incurring a lowering of strength. The present invention is suitable for welding an attaching member to a pipe for reinforcement, to which an instrument panel, etc. of a motor vehicle is attached.

## Claims

1. A welding method for arranging a flange part of an attaching member onto a mother member and welding the flange part to the mother member, in which
the welding corresponds to laser welding, and a laser beam is directed to the flange part along a welding path extending from a welding start point to a welding termination point to perform welding, the welding path being turned back before reaching the welding termination point, without overlap between the welding start point and the welding termination point, and the welding termination point being located at a place where no stress concentration occurs due to external forces on the mother member and the attaching member.

2. The laser welding method according to claim 1, wherein the welding path is substantially C-shaped, and after the welding path is turned back, a longer welding path than a crater produced in the welding termination point is provided to complete the welding termination point.

3. The laser welding method according claim 1, wherein the welding path is spiral-shaped, having at least one round which extends from an outer welding start point to an inner welding termination point, and after the welding path makes the one round, a longer welding path than a crater produced in the welding termination point may be further provided to complete the welding termination point.

4. The laser welding method according to one of claims 1 to 3, wherein the mother member is a pipe, and the flange part is formed into a circular arc, adapted to a shape of an outer periphery of the pipe.

5. The laser welding method according to one of claims 1 to 4, wherein the mother member and the attaching member may be for use in reinforcement of an instrument panel of a motor vehicle.

6. The laser welding method according to one of claims 1 to 5, wherein the laser welding corresponds to remote laser welding in which a long-focus laser beam is reflected in a mirror and guided along the welding path.
